# EUROPÄISCHE PATENTSCHRIFT

(11) **EP 3 892 083 B1**
(45) Veröffentlichungstag und Bekanntmachung des Hinweises auf die Patenterteilung: **16.09.2026**
(21) Anmeldenummer: 20169031.0
(22) Anmeldetag: 09.04.2020
(51) Int. Cl.: A01D 34/90, A01D 34/416

(54) **FREISCHNEIDER**
TRIMMER
DÉBROUSSAILLEUSE

(43) Veröffentlichungstag der Anmeldung: 13.10.2021
(73) Patentinhaber: Andreas Stihl AG & Co. KG, 71336 Waiblingen (DE)
(72) Erfinder: BICHELER, Liv, 71394 Kernen i. R. (DE); MANDEL, Roland, 70329 Stuttgart (DE); HAUG, Simon, 71336 Waiblingen (DE)
(74) Vertreter: Reinhardt, Annette

(56) Entgegenhaltungen:
- EP-A1- 2 474 218
- DE-A1- 102018 206 175
- US-A1- 2010 313 430
- US-A1- 2012 168 289

## Beschreibung

Die Erfindung betrifft einen Freischneider der im Oberbegriff des Anspruchs 1 angegebenen Gattung.

Aus der EP 2 845 460 A1 geht ein Freischneider hervor, an dessen Führungsrohr ein Lenkergriff mit zwei Handgriffen angeordnet ist.

Die EP 2 474 218 A1, die US 2012/0168289 A1 und die DE 10 2018 206 175 A1 zeigen Freischneider mit Handgriffen, die in Richtung auf die zur Anlage an die Handfläche des Benutzers vorgesehene Rückseite ballig ausgeführt sind.

Der Erfindung liegt die Aufgabe zugrunde, einen Freischneider der gattungsgemäßen Art zu schaffen, mit dem ein ergonomisches und ermüdungsfreies Arbeiten möglich ist.

Diese Aufgabe wird durch einen Freischneider mit den Merkmalen des Anspruchs 1 gelöst.

Im Betrieb des Freischneiders müssen über die Handgriffe vom Bediener Kräfte in unterschiedlichen Richtungen aufgebracht werden. Dabei kann es im Betrieb insbesondere notwendig werden, die Werkzeugeinheit zu schieben oder zu drücken. Dies ist insbesondere dann von Vorteil, wenn die Werkzeugeinheit ein Messer umfasst. Um über die Griffe Kräfte in Richtung auf die Werkzeugeinheit nach vorne einbringen zu können, ist vorgesehen, dass mindestens einer der Handgriffe eine Ballenauflage aufweist, die als sich an der Innenseite und der Rückseite des Schafts erstreckende Erhebung ausgebildet ist. Über die Ballenauflage kann sich der Handballen des Bedieners abstützen. Dadurch kann die Hand eine drehende, schiebende Bewegung im Betrieb ausführen und so sehr gut und ergonomisch Kräfte nach vorne in Richtung auf die Werkzeugeinheit einleiten.

In besonders bevorzugter Gestaltung weisen beide Handgriffe eine Ballenauflage auf. Dadurch können beide Handballen eine schiebende Bewegung nach vorne ausführen und sich dabei sehr gut an den Ballenauflagen der Handgriffe abstützen. Die seitliche Krafteinleitung ist durch die Ballenauflage verstärkt. Der Freischneider ist vorteilhaft an einem Traggurt so aufgehängt, dass der Freischneider am Traggurt in einer Arbeitsposition frei hängt. Der Schwerpunkt des Freischneiders ist gegenüber dem Aufhängepunkt vorteilhaft in Richtung auf die Werkzeugeinheit verschoben. Dadurch hängt der Freischneider an dem Traggurt so, dass die Werkzeugeinheit weiter unten angeordnet ist als das Gehäuse des Freischneiders.

Über die mindestens eine Ballenauflage können insbesondere Kräfte zum Mähen mit dem Freischneider gut eingeleitet werden. Beim Mähen wird der Freischneider in einer hin und hergehenden Bewegung bewegt. Der Freischneider wird vom Bediener gedrückt und geschoben, um eine Vorschubbewegung auszuführen. Die Krafteinleitung in seitlicher Richtung wird dabei durch die Ballenauflage verstärkt.

Über die mindestens eine Ballenauflage können insbesondere Kräfte zum Häckseln mit dem Freischneider gut eingeleitet werden. Beim Häckseln wird die Werkzeugeinheit auf- und abgehend bewegt. Die Kräfte für diese Bewegung werden vom Bediener durch Ziehen am Handgriff nach oben und Drücken des Handgriffs nach unten eingeleitet. Die Kraft für die Bewegung der Werkzeugeinheit nach unten wird dabei mindestens teilweise, insbesondere weitgehend durch die Gewichtskraft des Freischneiders aufgebracht.

Die mindestens eine Ballenauflage ermöglicht eine verbesserte Einbringung dieser Kräfte. Dadurch wird ein ergonomisches Arbeiten ermöglicht.

Erfindungsgemäß ist vorgesehen, dass die Ballenauflage eine Ballenauflagefläche aufweist, die zwischen zwei Ebenen liegt, deren Abstand weniger als 3 mm beträgt, wobei die in Richtung der Längsachse des Handgriffs gemessene Länge der Ballenauflagefläche mindestens 2,5 cm beträgt, und wobei die Breite der Ballenauflagefläche mindestens 8 mm beträgt und/oder dass der maximale Abstand der Ballenauflage zur Längsachse mindestens das 0,7fache des senkrecht zum maximalen Abstand und senkrecht zur Längsachse gemessenen Durchmessers des Schafts beträgt.

In einer erfindungsgemäßen Ausführung weist die Ballenauflage eine Ballenauflagefläche auf, die zwischen zwei Ebenen liegt, deren Abstand weniger als 3 mm beträgt. Die Ballenauflagefläche ist demnach eine näherungsweise ebene Fläche. Die Ballenauflagefläche ist durch die beiden Ebenen begrenzt. Abschnitte des Schafts, die nicht zwischen den beiden Ebenen liegen, werden nicht als Teil der Ballenauflagefläche betrachtet, selbst wenn der Handballen auf diesen Abschnitten aufgelegt werden könnte.

Die in Längsrichtung des Handgriffs gemessene Länge der Ballenauflagefläche beträgt bei dieser Ausführung mindestens 2,5 cm, insbesondere mindestens 3,5 cm. Dadurch können Kräfte in Umfangsrichtung über eine ausreichend große Länge des Schafts über den Handballen des Benutzers eingeleitet werden. Die Breite der Ballenauflagefläche beträgt bei dieser Ausführung mindestens 8 mm, insbesondere mindestens 1 cm.

In einer alternativen oder ergänzenden erfindungsgemäßen Ausführung beträgt der maximale Abstand der Ballenauflage zur Längsrichtung mindestens das 0,7fache, insbesondere mindestens das 0,8fache des senkrecht zum maximalen Abstand und senkrecht zur Längsrichtung gemessenen Durchmessers des Schafts. An der Ballenauflagefläche weist die Rückseite in einer Schnittebene senkrecht zur Längsrichtung an jeder Stelle einen Radius von insbesondere mindestens 10 mm, insbesondere mindestens 15 mm auf. Insbesondere für den zweiten Handgriff können jedoch auch kleinere Radien im Randbereich der Ballenauflage vorgesehen sein. Bevorzugt ist die Rückseite an der Ballenauflagefläche etwa eben ausgebildet. Die Ballenauflagefläche kann in einem Schnitt senkrecht zur Längsachse des Handgriffs konvex und/oder konkav gewölbt sein. Vorteilhaft sind die in Umfangsrichtung außen liegenden Abschnitte der Ballenauflagefläche konvex gewölbt. In Umfangsrichtung zwischen den konvex gewölbten Abschnitten kann ein ebener oder konkav gewölbter Abschnitt verlaufen.

Vorteilhaft ist die Ballenauflage in der an das Befestigungsende angrenzenden Hälfte des Handgriffs angeordnet.

Bevorzugt weisen beide Handgriffe eine unterschiedliche Form auf. Bevorzugt sind an einem der Handgriffe Bedienelemente zur Bedienung eines Antriebsmotors des Freischneiders angeordnet. Bevorzugt ist der Handgriff, der mindestens ein Bedienelement aufweist, größer als der andere Handgriff. Bevorzugt ist der rechte Handgriff größer als der linke Handgriff.

Um das Greifen der Handgriffe und insbesondere auch das Schieben des Freischneiders mit dem Handballen zu vereinfachen, ist vorteilhaft vorgesehen, dass mindestens ein Handgriff in mindestens einem Abschnitt des Schafts eine Gummierung aufweist. Bevorzugt erstreckt sich die Gummierung zumindest teilweise, insbesondere vollständig über die Ballenauflage.

Ausführungsbeispiele der Erfindung werden im Folgenden anhand der Zeichnung erläutert. Es zeigen:
- Fig. 1: eine schematische, perspektivische Darstellung eines Bedieners mit einem Freischneider,
- Fig. 2: eine perspektivische Darstellung eines ersten Handgriffs des Freischneiders aus Fig. 1,
- Fig. 3: eine Seitenansicht auf die Außenseite des Handgriffs aus Fig. 2,
- Fig. 4: einen Schnitt durch den Handgriff in Richtung der Linie IV-IV in Fig. 3,
- Fig. 5: eine Seitenansicht in Richtung des Pfeils V in Fig. 3 auf die Rückseite des Handgriffs,
- Fig. 6: eine Seitenansicht in Richtung des Pfeils VI in Fig. 5 auf die Innenseite des Handgriffs,
- Fig. 7: eine ausschnittsweise Schnittdarstellung entlang der Linie VII-VII in Fig. 6,
- Fig. 8: eine ausschnittsweise Schnittdarstellung entlang der Linie VIII-VIII in Fig. 6,
- Fig. 9: eine Seitenansicht in Richtung des Pfeils IX-IX in Fig. 3 auf die Vorderseite des Handgriffs,
- Fig. 10: eine perspektivische, schematische Darstellung der Daumenauflagefläche des Handgriffs,
- Fig. 11: eine schematische Darstellung des Betätigungswegs des dritten Bedienelements des Handgriffs,
- Fig. 12: eine perspektivische Darstellung des dritten Bedienelements in unbetätigter Stellung,
- Fig. 13: eine perspektivische Darstellung des dritten Bedienelements in betätigter Stellung,
- Fig. 14 bis 18: schematische Darstellungen möglicher unterschiedlicher Handhaltungen am ersten Handgriff,
- Fig. 19: eine Seitenansicht eines zweiten Handgriffs,
- Fig. 20: einen Schnitt durch eine Ballenauflage des zweiten Handgriffs entlang der Linie XX-XX in Fig. 19,
- Fig. 21 und 22: perspektivische Darstellungen des zweiten Handgriffs,
- Fig. 23: eine Seitenansicht auf die Rückseite des zweiten Handgriffs in Richtung des Pfeils XXIII in Fig. 19,
- Fig. 24: eine Seitenansicht in Richtung des Pfeils XXIV in Fig. 23 auf die Außenseite des Handgriffs,
- Fig. 25: eine ausschnittsweise Schnittdarstellung durch die Daumenauflagefläche entlang der Linie XXV-XXV in Fig. 19,
- Fig. 26: eine Seitenansicht eines Lenkergriffs eines Freischneiders mit zwei Handgriffen,
- Fig. 27: einen Schnitt entlang der Linie XXVII-XXVII in Fig. 26 durch den zweiten, linken Handgriff,
- Fig. 28: einen Schnitt entlang der Linie XXVIII-XXVIII in Fig. 26 durch den ersten, rechten Handgriff.

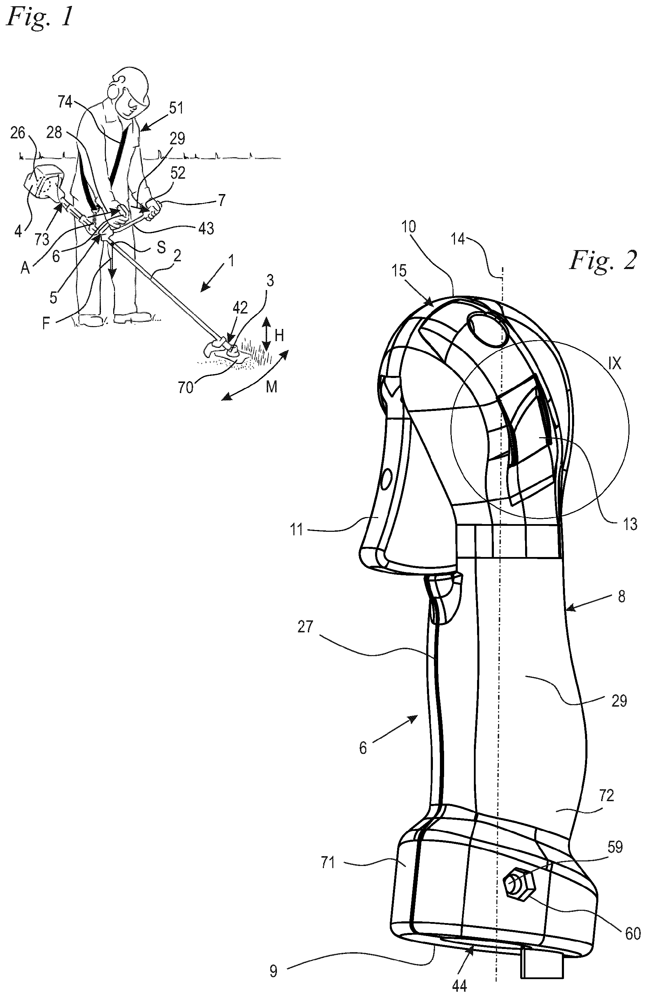

Fig. 1 zeigt schematisch einen Benutzer 51, der ein handgeführtes Arbeitsgerät, nämlich einen Freischneider 1 trägt. Der Freischneider 1 weist ein Führungsrohr 2 auf. An einem Ende 42 des Führungsrohrs 2 ist eine Werkzeugeinheit 3, im Ausführungsbeispiel ein Werkzeugkopf mit einem Schneidmesser 70, angeordnet. Am anderen Ende 73 des Führungsrohrs ist ein Gehäuse 4 angeordnet. Im Ausführungsbeispiel ist im Gehäuse 4 ein schematisch dargestellter Antriebsmotor 26 angeordnet. Der Antriebsmotor 26 kann beispielsweise ein Elektromotor, insbesondere ein von einem Akku mit Energie versorgter Elektromotor, oder ein Verbrennungsmotor sein.

Der Bediener 51 trägt den Freischneider 1 mit einem Traggurt 74. Über den Traggurt 74 wird das Gewicht des Freischneiders 1 im Betrieb zumindest teilweise, insbesondere weitgehend aufgenommen. Der Traggurt 74 hält den Freischneider 1 an einem Aufhängepunkt A. Der Freischneider 1 ist an dem Traggurt 74 vorteilhaft so aufgehängt, dass der Freischneider 1 an dem Traggurt 74 in einer Arbeitslage, also einer Lage, in der die Werkzeugeinheit 3 weiter unten angeordnet ist als das Gehäuse 4, frei hängt. In Fig. 1 sind schematisch der Schwerpunkt S des Freischneiders 1 und die Gewichtskraft F eingezeichnet. Der Schwerpunkt S des Freischneiders 1 ist gegenüber dem Aufhängepunkt A vorteilhaft in Richtung auf die Werkzeugeinheit 3 verschoben. Dadurch hängt der Freischneider 1 an dem Traggurt 74 so, dass die Werkzeugeinheit 3 weiter unten angeordnet ist als das Gehäuse 4 des Freischneiders 1.

Zum Führen des Freischneiders 1 ist am Führungsrohr 2 ein Lenkergriff 5 fixiert. Über den Lenkergriff 5 werden im Betrieb insbesondere die Kräfte zum Vorschub des Werkzeugs eingeleitet. Die Vorschubbewegung kann beispielsweise eine hin- und hergehende Bewegung beim Mähen oder eine auf- und abgehende, schlagende Bewegung beim Häckselbetrieb sein. Die Bewegungsrichtung beim Mähen ist in Fig. 1 schematisch mit dem Doppelpfeil M eingezeichnet und die Bewegungsrichtung beim Häckselbetrieb mit dem Doppelpfeil H.

Der Lenkergriff 5 ist ein sogenannter Bikelenker. Der Lenkergriff 5 umfasst einen Lenkerholm 43. Der Lenkerholm 43 erstreckt sich vorzugsweise etwa quer zum Führungsrohr 2. An den beiden Enden des Lenkerholms 43 ist jeweils ein Handgriff 6 bzw. 7 angeordnet. Die Handgriffe 6 und 7 weisen Innenseiten 29 auf, die einander zugewandt angeordnet sind. Die Handgriffe 6 und 7 weisen einander abgewandt liegende Außenseiten 28 auf. Die Außenseiten 28 der Handgriffe 6 und 7 liegen am Handteller 52 des Benutzers 51 an. Die Innenseiten 29 sind damit die einander nahe liegenden Seiten der Handgriffe 6 und 7 und die Außenseiten 28 sind die einander entfernt liegenden Seiten der Handgriffe 6 und 7.

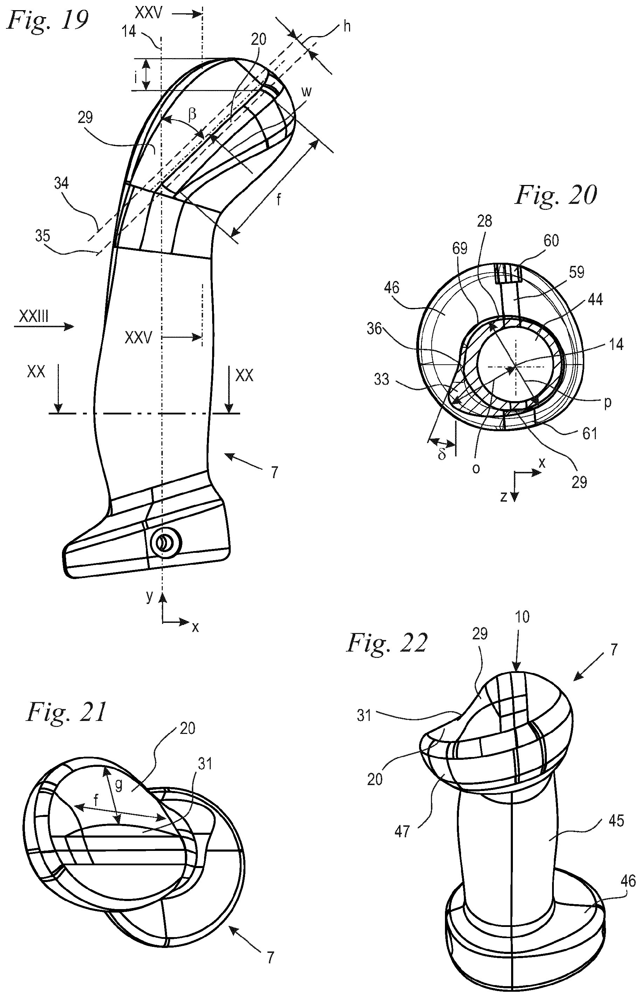

Die Fig. 2 bis 18 zeigen den ersten Handgriff 6, im Ausführungsbeispiel den rechten Handgriff. Die Fig. 19 bis 25 zeigen den zweiten Handgriff 7, der im Ausführungsbeispiel den linken Handgriff des Freischneiders 1 bildet. Die Handgriffe 6 und 7 können auch bei anderen handgeführten Arbeitsgeräten, insbesondere bei Blasgeräten, Sprühgeräten oder dgl. zum Einsatz kommen.

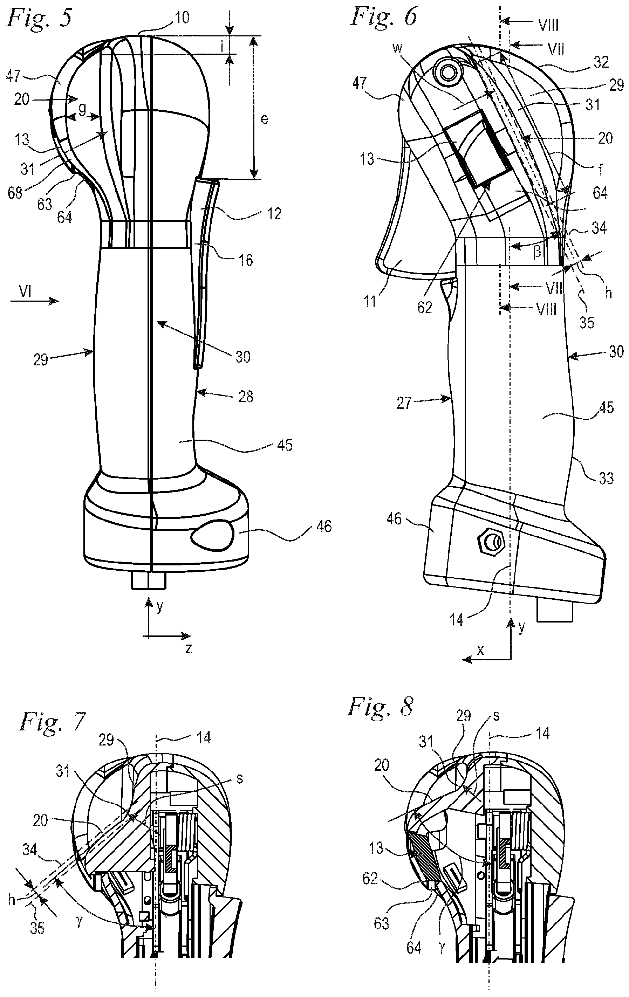

Wie Fig. 2 zeigt, weist der erste Handgriff 6 einen Schaft 8 auf. Der Schaft 8 weist ein Befestigungsende 9 sowie ein freies Ende 10 auf. In üblicher Arbeitshaltung an einem Freischneider 2 weist das freie Ende 10 nach vorn und oben. Am Befestigungsende 9 ist im Ausführungsbeispiel eine Aufnahme 44 ausgebildet, in die der Lenkerholm 43 eingesteckt ist. Die Mittelachse der Aufnahme 44 fällt vorteilhaft mit einer Längsachse 14 des Handgriffs 6 zusammen. Der Schaft 8 des Handgriffs 6 ist im Ausführungsbeispiel aus zwei Halbschalen 71 und 72 aufgebaut, die in einer Trennebene parallel zur Längsachse 40 aneinander anliegen. Der erste Handgriff 6 weist eine Vorderseite 27 auf, die sich zwischen der Außenseite 28 und der Innenseite 29 erstreckt. Die Vorderseite 27 ist zur Anlage an den Fingern einer Hand des Benutzers 51 vorgesehen. Außerdem weist der Handgriff 2 eine Rückseite 30 auf, die in Fig. 5 dargestellt ist und die gegenüberliegend zur Vorderseite 27 angeordnet ist. In üblicher Arbeitshaltung liegt die Rückseite 30 bei einem Freischneider dem Bediener zugewandt, und die Vorderseite 27 weist in Richtung zur Werkzeugeinheit 3.

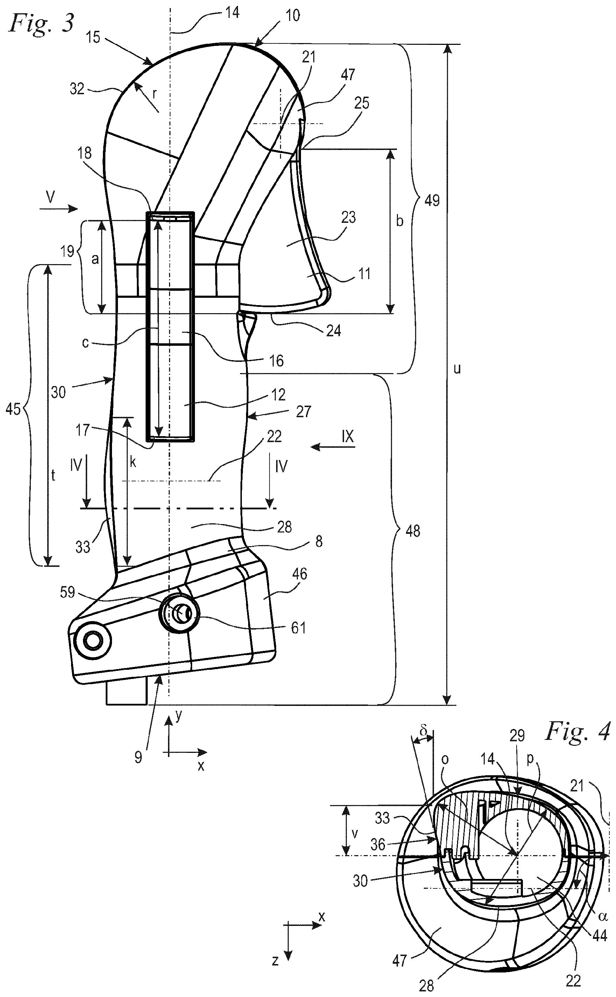

Zur Fixierung des Handgriffs 6 am Lenkerholm 43 ist vorteilhaft eine nicht dargestellte Befestigungsschraube vorgesehen, die durch eine Befestigungsöffnung 59 im Handgriff 6 ragt. Die Befestigungsschraube durchragt vorteilhaft auch Öffnungen im Lenkerholm 43 und legt dadurch die Lage des Handgriffs 6 gegenüber dem Lenkerholm 43 fest. In Fig. 2 ist eine Aufnahme 60 für eine Befestigungsmutter dargestellt. Wie Fig. 3 zeigt, weist die gegenüberliegende Außenseite 28 eine Aufnahme 61 für eine Befestigungsschraube auf, die in die Befestigungsmutter auf der gegenüberliegenden Seite des Handgriffs 6 einzuschrauben ist.

Wie Fig. 2 auch zeigt, ist am freien Ende 10 des Handgriffs 6 eine Auflagefläche 15 für eine Hand des Benutzers 51 ausgebildet. Die Auflagefläche 15 ist gerundet ausgebildet und in ihrer Größe an die Handinnenfläche eines Benutzers angepasst. Wie Fig. 2 auch zeigt, weist der erste Handgriff 6 ein erstes Bedienelement 11 sowie ein drittes Bedienelement 13 auf.

Ein zweites Bedienelement 12, das ebenfalls am ersten Handgriff 6 angeordnet ist, ist in Fig. 3 dargestellt. Der Schaft 8 bildet einen länglichen Grundkörper des ersten Handgriffs 6, an dem die Bedienelemente 11, 12 und 13 gelagert sind. Das erste Bedienelement 11 ist vorteilhaft zur Ansteuerung des Antriebsmotors 26 ausgebildet. Mit dem ersten Bedienelement 11 lässt sich insbesondere die Drehzahl des Antriebsmotors 26 und damit die Drehzahl des Werkzeugs einstellen. Das zweite Bedienelement 12 kann vorteilhaft in unbetätigter Stellung die Ansteuerung des Antriebsmotors 26 über das erste Bedienelement verhindern, beispielsweise durch Sperrung des ersten Bedienelements 11. Das dritte Bedienelement kann beispielsweise ein Stoppschalter sein. Auch eine andere Funktion der Bedienelemente 11, 12 und 13 kann jedoch vorteilhaft sein.

Das erste Bedienelement 11 ragt, wie Fig. 3 zeigt, an der Vorderseite 27 mit einem Betätigungsabschnitt 23 aus dem Schaft 8. Der Betätigungsabschnitt 23 ist der gesamte Abschnitt des ersten Bedienelements 11, der in unbetätigter Stellung des ersten Bedienelements 11 aus dem Schaft 8 ragt. Das erste Bedienelement 11 ist um eine erste Schwenkachse 21 schwenkbar gelagert. Die erste Schwenkachse 21 liegt näher am freien Ende 10 des Handgriffs 6 als der Betätigungsabschnitt 23. Der Betätigungsabschnitt 23 des ersten Betätigungselements 11 weist ein erstes Ende 24 und ein zweites Ende 25 auf. Das erste Ende 24 liegt näher am Befestigungsende 9 als das zweite Ende 25. Die Schwenkachse 21 liegt näher am zweiten Ende 25 des Betätigungsabschnitts 23 als am ersten Ende 24. Die Schwenkachse 21 liegt in Richtung der Längsachse 14 näher am freien Ende 10 als das zweite Ende 25 des Betätigungsabschnitts 23. Der Betätigungsabschnitt 23 des ersten Betätigungselements 11 weist eine in Richtung der Längsachse 14 gemessene Länge b auf.

Das zweite Bedienelement 12 weist einen Betätigungsabschnitt 16 auf, der aus dem Schaft 8 ragt. Der Betätigungsabschnitt 16 ist der gesamte Abschnitt des zweiten Bedienelements 12, der in unbetätigter Stellung des zweiten Bedienelements 12 aus dem Schaft 8 ragt. Der Betätigungsabschnitt 16 weist eine in Richtung der Längsachse 14 gemessene Länge c auf. Die Längen b und c können näherungsweise gleich groß sein. Im Ausführungsbeispiel ist die Länge b kleiner als die Länge c.

Der Betätigungsabschnitt 16 des zweiten Bedienelements 12 weist ein erstes Ende 17 und ein zweites Ende 18 auf. Das erste Ende 17 liegt näher am Befestigungsende 9 als das zweite Ende 18. Beide Betätigungsabschnitte 16 und 23 sind in Richtung der Längsachse 14 ausgerichtet. Das zweite Betätigungselement 12 ist um eine Schwenkachse 22 schwenkbar gelagert. Die Schwenkachse 22 liegt näher am ersten Ende 17 als am zweiten Ende 18 des Betätigungsabschnitts 16. Das erste Ende 17 weist im Ausführungsbeispiel zum Befestigungsende 9 in Richtung der Längsachse 14 einen größeren Abstand auf als die Schwenkachse 22. Die Schwenkachse 22 liegt im Ausführungsbeispiel in Richtung der Längsachse 14 zwischen dem ersten Ende 17 und dem Befestigungsende 9.

Die Betätigungsabschnitte 23 und 16 überlappen sich in unbetätigter Stellung der Bedienelemente 11 und 12 in einem Längenabschnitt 19. Der Längenabschnitt 19, in dem sich sowohl der Betätigungsabschnitt 23 als auch der Betätigungsabschnitt 16 erstrecken, weist eine in Richtung der Längsachse gemessene Länge a auf. Die Länge a beträgt vorteilhaft mindestens 30% der Länge b des Betätigungsabschnitts 23 des ersten Bedienelements 11. Bevorzugt beträgt die Länge a mindestens 50% der Länge b.

Der Schaft 8 des ersten Handgriffs 6 weist einen Griffabschnitt 45 auf. Der Griffabschnitt 45 weist eine längliche, in grober Näherung zylindrische Form auf. In Richtung auf das Befestigungsende 9 schließt an den Griffabschnitt 45 ein verdickter Abschnitt 46 an. In Richtung auf das freie Ende 10 schließt an den Griffabschnitt 45 ein verdickter Abschnitt 47 an. Die Länge t des Griffabschnitts 45, die in Richtung der Längsachse 14 gemessen ist, beträgt vorteilhaft ein Viertel bis drei Viertel der Gesamtlänge u des Handgriffs 6. Die Gesamtlänge u ist dabei parallel zur Längsachse 14 gemessen.

Der Handgriff 6 weist eine erste Hälfte 48 auf, die sich vom Befestigungsende 9 über die halbe Länge u erstreckt. Der Handgriff 6 weist außerdem eine zweite Hälfte 49 auf, die an die erste Hälfte 48 anschließt und bis an das freie Ende 10 ragt. Die zweite Hälfte 49 erstreckt sich über die Hälfte der Länge u. Der Griffabschnitt 45 ist mindestens teilweise in der ersten Hälfte 48 angeordnet. Im Ausführungsbeispiel erstreckt sich der Griffabschnitt 45 über mindestens 60% seiner Länge t in der ersten Hälfte 48. Der Griffabschnitt 45 ragt auch in die zweite Hälfte 49. Der Überlappungsbereich 19 ist im Ausführungsbeispiel vollständig in der zweiten Hälfte 49 angeordnet. Es kann auch vorgesehen sein, dass sich der Überlappungsbereich 19 teilweise in die erste Hälfte 48 erstreckt.

Die Auflagefläche 15 geht über eine Rundung 32 in die Rückseite 30 über. Die Rundung 32 ist konvex ausgebildet und verläuft im Ausführungsbeispiel gerundet. Der Radius r der Rundung 32 beträgt in Seitenansicht auf die Außenseite 28, die in Fig. 3 gezeigt ist, an jeder Stelle mindestens 1,5 cm, insbesondere mindestens 2 cm. Als besonders vorteilhaft wird ein Radius r von mindestens 3 cm angesehen. Der Radius r kann dabei im Verlauf der Rundung 32 variieren. Durch die Rundung 32 wird ein gleichmäßiger Übergang von der Rückseite 30 zur Auflagefläche 15 erreicht. An der Rundung 32 kann die Hand des Benutzers 51 gut entlanggleiten. Aufgrund der gerundeten Form der Rundung 32 kann dabei ein näherungsweise gleichbleibender Abstand zum gegenüberliegenden, ersten Bedienelement 11 eingehalten werden. Dadurch kann sichergestellt werden, dass der Benutzer 51 das Bedienelement 11 in jeder vorgesehenen Handhaltung greifen kann.

Der Schaft 8 weist eine Ballenauflage 33 auf. Die Ballenauflage 3 ist vorteilhaft am Griffabschnitt 45 angeordnet. Wie Fig. 3 zeigt, weist die Ballenauflage 33 eine parallel zur Längsachse 14 gemessene Länge k auf. Die Länge k beträgt vorteilhaft mindestens 2,5 cm, insbesondere mindestens 3,5 cm. Im Ausführungsbeispiel erstreckt sich die Ballenauflage 33 bis nahe an den verdickten Abschnitt 46.

Fig. 4 zeigt einen Schnitt durch den Handgriff 6 im Bereich der Ballenauflage 33. Der Schnitt verläuft senkrecht zur Längsachse 14. Die Ballenauflage 33 ist als eine nach außen ragende Erhebung aus dem ansonsten vorteilhaft näherungsweise runden Querschnitt des Griffabschnitts 45 gebildet. Die Ballenauflage 33 erstreckt sich im Ausführungsbeispiel an der Innenseite 29 und der Rückseite 30. Ihre größte radiale Erstreckung weist die Ballenauflage 33 näherungsweise in dem Bereich auf, in dem die Innenseite 29 und die Rückseite 30 aneinander angrenzen. Die Ballenauflage 33 weist eine Ballenauflagefläche 36 auf, die näherungsweise eben verläuft. Die Ballenauflagefläche 36 verläuft vorteilhaft an der Rückseite 30. Die Ballenauflage 33 weist einen maximalen Abstand o zur Längsachse 14 auf. Der Schnitt in Fig. 4 verläuft in dem Bereich, in dem die Ballenauflage 33 den maximalen Abstand o zur Längsachse 14 aufweist. In der gleichen Schnittebene, in der der maximale Abstand o besteht, weist der Handgriff 6 einen senkrecht zum maximalen Abstand o gemessenen Durchmesser p auf. Der maximale Abstand o ist vorteilhaft größer als der halbe Durchmesser p. Der maximale Abstand o beträgt vorteilhaft mindestens das 0,7fache, insbesondere mindestens das 0,8fache des Durchmessers p des Schafts 8.

Wie Fig. 4 auch zeigt, liegen die Schwenkachsen 21 und 22 der Bedienelemente 11 und 12 senkrecht zueinander. Die Schwenkachsen 21 und 22 schließen einen Winkel α ein, der vorteilhaft kleiner als 180° ist. Der Winkel α beträgt insbesondere weniger als 120°, bevorzugt etwa 90°. Im Ausführungsbeispiel spannen die Schwenkachsen 21 und 22 mit der Längsachse 14 ein Koordinatensystem auf. Die Längsachse 14 definiert die y-Richtung des Koordinatensystems. Die y-Achse weist vom Befestigungsende 9 zum freien Ende 10. Die Schwenkachse 21 des ersten Bedienelements 11 entspricht der z-Achse und die Schwenkachse 22 des zweiten Bedienelements 12 der x-Achse. Die x-Achse ist von der Rückseite 30 zur Vorderseite 27 gerichtet. Die z-Achse ist von der Innenseite 29 zur Außenseite 28 gerichtet. Die Achsen x, y und z bilden ein Rechtsdrehsystem. Die Ballenauflage 33 erstreckt sich in negative z-Richtung und negative x-Richtung. Die Ballenauflagefläche 36 ist zur z-Richtung um einen Winkel δ geneigt, der vorteilhaft an jeder Stelle weniger als 45°, insbesondere weniger als 30° beträgt. Die Ballenauflagefläche 36 weist an der Stelle, an der der maximale Abstand o zur Längsachse 14 besteht, einen in z-Richtung gemessenen Abstand v auf, der vorteilhaft mindestens dem 0,3fachen des Durchmessers p entspricht.

Wie die Fig. 5 und 6 zeigen, weist der erste Handgriff 6 eine Daumenfläche 20 auf. Die Daumenauflagefläche 20 erstreckt sich an der Innenseite 29 im verdickten Abschnitt 47. Die Daumenauflagefläche 20 weist eine Breite g auf, die senkrecht zur Längsachse 14 gemessen ist. Die Daumenauflagefläche 20 weist zum freien Ende 10 einen in Richtung der Längsachse 14 gemessenen Abstand i auf. Für den ersten Handgriff 6 kann der Abstand i sehr klein sein. Die Daumenauflagefläche 20 kann bis nahe an das freie Ende 10 ragen.

Wie Fig. 5 zeigt, ist in der dargestellten Seitenansicht in Richtung der x-Achse auf die Rückseite 30 das dritte Bedienelement 13 weitgehend oder vollständig verdeckt. Das dritte Bedienelement 13 liegt in dieser Blickrichtung mindestens teilweise hinter der Daumenauflagefläche 20. Das dritte Bedienelement 13 ist von einer Abdeckung 68 abgedeckt. Wie die Fig. 5 und 6 zeigen, weist das dritte Bedienelement 13 eine dem Befestigungsende 9 zugewandt liegende Seite 62 (Fig. 6) auf. Im Ausführungsbeispiel ist das dritte Bedienelement 13 etwa parallel zur Daumenauflagefläche 20 ausgerichtet. Die Seite 62 verläuft geneigt zur Längsachse 14. Nahe der Seite 62 ist am Handgriff 6 eine Vertiefung 64 ausgebildet, die die Betätigung des dritten Bedienelements 13 an der Seite 62 erleichtert. Gegenüber der Vertiefung 64 weist das dritte Bedienelement 13 an der Seite 62 einen Überstand 63 auf. Der Überstand 63 beträgt vorteilhaft mindestens 1 mm, insbesondere mindestens 2 mm. Dadurch ist auch mit Handschuhen ein sicheres Betätigen des Bedienelements 13 an der Seite 62 möglich. Wie Fig. 5 auch zeigt, weist das zweite Bedienelement 12 zum freien Ende 10 einen parallel zur Längsachse 14 gemessenen Abstand e auf.

In den Fig. 6 bis 8 ist die Ausrichtung der Daumenauflagefläche 20 dargestellt. Wie Fig. 6 zeigt, ist die Daumenauflagefläche 20 in einer Blickrichtung auf die Innenseite 29, also bei Blickrichtung in Richtung der z-Achse, um einen Winkel β zur Längsachse 14 geneigt. Der Winkel β beträgt an jeder Stelle der Daumenauflagefläche 20 mindestens 20° und höchstens 70°. Dadurch wird zum einen eine ergonomische Handhaltung erreicht. Zum anderen ist aufgrund der Ausrichtung der Daumenauflagefläche 20 eine sehr gute Einleitung von Kräften zur Werkzeugeinheit 3 (Fig. 1) hin möglich, so dass sich insbesondere zum Schieben und Drücken des Werkzeugs günstige Kräfteverhältnisse ergeben.

In der in Fig. 6 dargestellten Seitenansicht ist die Daumenauflagefläche 20 bevorzugt konvex gekrümmt. Auch eine ebene oder konkav gekrümmte Gestaltung kann jedoch vorteilhaft sein. Die Daumenauflagefläche 20 liegt zwischen zwei parallelen Ebenen 34 und 35. Die Ebenen 34 und 35 verlaufen vorteilhaft zur Blattebene geneigt. Die Ebenen 34 und 35 verlaufen zu keiner der Achsen x, y und z des Koordinatensystems des Handgriffs 6 parallel. Die Ebenen 34 und 35 sind daher in Fig. 6 schematisch dargestellt. Die Daumenauflagefläche 20 ist dabei vorteilhaft so ausgebildet, dass der Abstand h der beiden Ebenen 34 und 35 weniger als 3 mm, insbesondere weniger als 2 mm beträgt. Die Breite g der Daumenauflagefläche 20 beträgt vorteilhaft mindestens 8 mm. Die Länge f der Daumenauflagefläche 20, die in Fig. 6 eingezeichnet ist, beträgt vorteilhaft mindestens 2,5 cm. Bevorzugt ist eine Länge f von mindestens 3 cm, insbesondere mindestens 4 cm vorgesehen. Die Länge f und die Breite g sind dabei in einem Bereich gemessen, der zwischen den Ebenen 34 und 35 liegt. Außerhalb der Ebenen 34 und 35 liegende, an die Daumenauflagefläche 20 angrenzende Flächenabschnitte werden vorliegend nicht als Teil der Daumenauflagefläche 20 betrachtet. Die Daumenauflagefläche 20 weist vorteilhaft eine Krümmung auf, deren Radius w an jeder Stelle mindestens 10 mm, insbesondere mindestens 15 mm, vorteilhaft mindestens 30 mm beträgt. Im Ausführungsbeispiel beträgt der Radius der Krümmung an jeder Stelle mindestens 40 mm. Auch eine ebene Gestaltung der Daumenauflagefläche 20, also ein unendlicher Radius, kann vorteilhaft sein. Die Daumenauflagefläche 20 geht mit einer Wölbung 31 in die Innenseite 29 des Handgriffs 6 über. Die Wölbung 31 ist konkav ausgebildet.

Wie die Fig. 7 und 8 zeigen, fällt die Daumenauflagefläche 20 in einer Richtung von der Längsachse 14 nach außen hin ab. Auch ein geringfügiges Ansteigen der Daumenauflagefläche in dieser Richtung kann jedoch vorteilhaft sein. In einer Schnittebene, die parallel zur Längsachse 14 und durch die Innenseite 29 verläuft, also eine Schnittebene in y-z-Ebene, schließt die Daumenauflagefläche 20 mit der Längsachse 14 einen Winkel γ ein, der zum Befestigungsende 9 öffnet. Der Winkel γ beträgt vorteilhaft 30° bis 110°. Besonders bevorzugt beträgt der Winkel γ 45° bis 90°. Der Winkel γ ist bevorzugt kleiner als 90°. In Fig. 8 ist auch der Überstand 63 des dritten Bedienelements 13 über die Vertiefung 64 gut erkennbar. Die Fig. 7 und 8 zeigen außerdem die Gestaltung der konkaven Wölbung 31. Die Wölbung 31 weist einen Radius s auf, der vergleichsweise klein, nämlich kleiner als 2 cm, insbesondere kleiner als 1 cm ausgebildet sein kann. Der Radius s muss dabei nicht durchgehend gleich groß sein, sondern kann variieren, wie Fig. 7 und 8 zeigen.

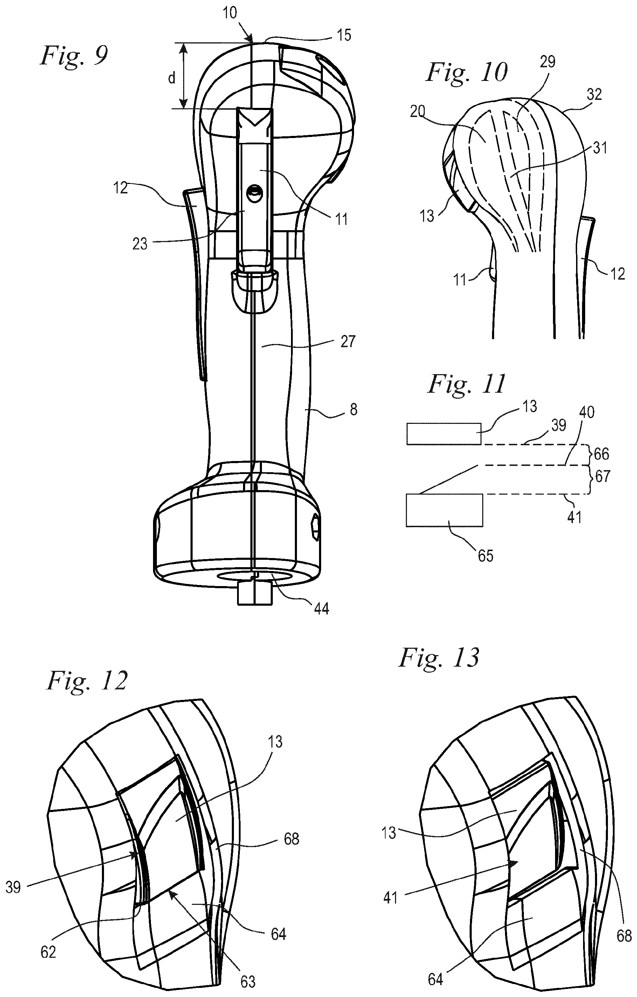

Wie Fig. 9 zeigt, weist der Betätigungsabschnitt 23 des ersten Bedienelements 11 zum freien Ende 10 einen Abstand d auf. Der Betätigungsabschnitt 16 des zweiten Bedienelements 12 weist zum freien Ende 10 den in Fig. 5 dargestellten Abstand e auf. Der Abstand e ist im Ausführungsbeispiel größer als der Abstand d. Die Abstände d und e betragen vorteilhaft jeweils weniger als 7 cm. Dadurch können die Bedienelemente 11 und 12 auch dann von einem Benutzer 51 betätigt werden, wenn die Hand des Benutzers 51 auf der Auflagefläche 15 aufliegt.

Auch in Fig. 10 ist die Gestaltung der Daumenauflagefläche 20, der Wölbung 31 und der hieran angrenzenden Innenseite 29 dargestellt.

Das zweite Bedienelement 13 ist so angeordnet, dass eine unbeabsichtigte Betätigung des zweiten Bedienelements 13 vermieden ist, auch wenn der Bediener seine Hand auf die Auflagefläche 15 am freien Ende 10 des Schafts 8 auflegt. Wie Fig. 11 schematisch zeigt, kann das zweite Bedienelement 13 beispielsweise einen schematisch dargestellten Schalter 65 betätigen. Auch eine Betätigung eines mechanischen Elements kann vorgesehen sein. Der Schalter 13 besitzt eine in Fig. 11 schematisch dargestellte unbetätigte Stellung 39 sowie eine betätigte Stellung 41, in der der Schalter 65 vollständig betätigt ist. Zwischen diesen Stellungen kann das Betätigungselement 13 zunächst einen Leerhub 66 zurücklegen. Innerhalb des Leerhubs 66 ist der Schalter 65 nicht betätigt. An den Leerhub 66 schließt sich ein Betätigungshub 67 an, in dem der Schalter 65 gedrückt wird. Die Position des dritten Bedienelements 13, in der das Bedienelement 13 den Leerhub 66 durchlaufen hat und beginnt, den Betätigungshub 67 auszuführen, wird vorliegend als Betätigungsposition 40 bezeichnet. Um eine unbeabsichtigte Betätigung des Schalters 65 zu verhindern, ist die Betätigungsposition 40 entscheidend, bei der der Betätigungshub 67 beginnt. Eine Betätigung des dritten Bedienelements 30 innerhalb des Leerhubs 66 ist für die Funktion des Freischneiders 1 ohne Bedeutung.

Fig. 12 zeigt das dritte Bedienelement 13 in unbetätigter Stellung 39. Das zweite Bedienelement 13 ist im Ausführungsbeispiel von der Abdeckung 68 in Richtung auf die Daumenauflagefläche 20 und das freie Ende 10 hin verdeckt. Die Abdeckung 68 ist dabei mindestens so groß, dass das dritte Bedienelement 13 in der Betätigungsposition 40 bei Blickrichtung in Richtung der Längsachse 14 auf das Befestigungsende 9 über höchstens 1 mm über die Außenkontur des Handgriffs 6, 7, also über die Abdeckung 68 vorsteht.

Fig. 13 zeigt das dritte Bedienelement 13 in betätigter Stellung 41. Das Bedienelement 13 ist im Ausführungsbeispiel tiefer in den Schaft 8 eingedrückt als die Vertiefung 64, so dass die Vertiefung 64 über das Bedienelement 13 an der Seite 62 vorsteht. Es kann jedoch auch vorgesehen sein, dass das dritte Bedienelement 13 eben mit dem Boden der Vertiefung 64 abschließt oder über diesen hervorsteht. Ein Verstellen des dritten Bedienelements 13 aus der in Fig. 12 dargestellten unbetätigten Stellung 39 in die in Fig. 13 gezeigte betätigte Stellung 41 ist aufgrund der Abdeckung 68 vorteilhaft nur dann möglich, wenn der Bediener aktiv das Bedienelement 13 drückt. Eine unbeabsichtigte Betätigung ist aufgrund der Abdeckung 68 vermieden.

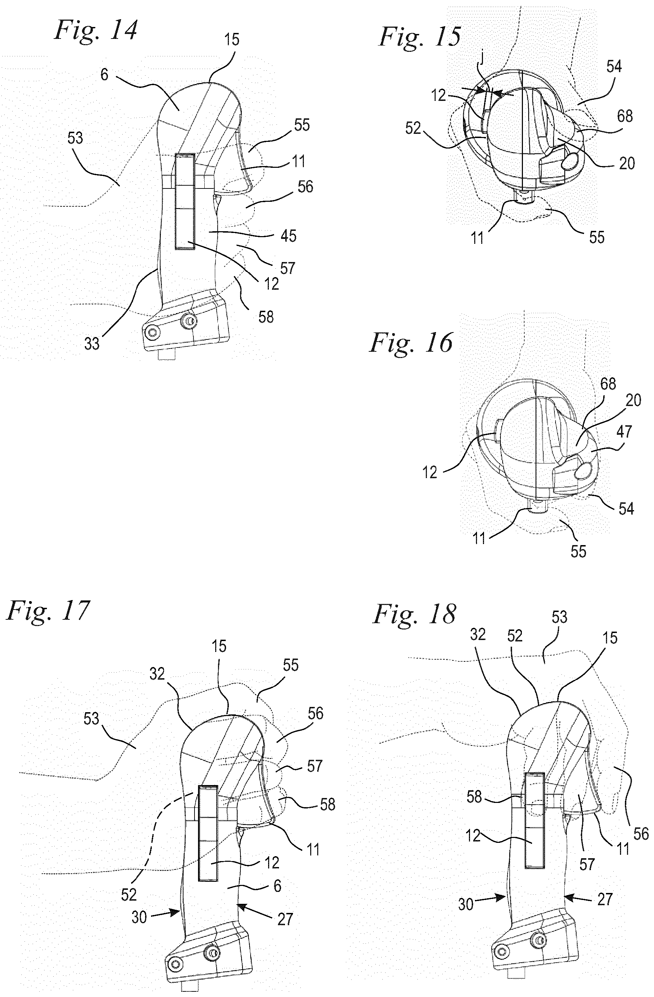

Die Fig. 14 bis 18 zeigen unterschiedliche mögliche Greifpositionen für den Handgriff 6. Fig. 14 zeigt den Handgriff 6 schematisch mit der Hand 53 eines Benutzers 51 (Fig. 1). Die Hand 53 des Benutzers 51 umschließt den Griffabschnitt 45. Der Handballen liegt an der Ballenauflage 33 an. Der Handteller 52 (Fig. 15) liegt am zweiten Bedienelement 12 an und betätigt dieses. Der Zeigefinger 55 liegt am ersten Bedienelement 11 an und kann dieses betätigen. Der Mittelfinger 56, der Ringfinger 57 und der kleine Finger 58 umschließen den Griffabschnitt 45. Für diese Handhaltung sind zwei mögliche Positionen für den Daumen 54 vorgesehen. Fig. 15 zeigt eine Anordnung, bei der der Daumen 54 auf der Daumenauflagefläche 20 aufliegt und sich an dieser abstützt. Bei der in Fig. 16 dargestellten Position liegt der Daumen 55 unterhalb des verdickten Abschnitts 47. Der Daumen 54 kann in dieser Position den Griffabschnitt 54 umschließen. Wie Fig. 15 zeigt, kann der Daumen 54 jedoch auch das dritte Bedienelement 13 betätigen. In diesem Fall liegt der Daumen 54 unterhalb der Verdickung 68 (Fig. 12 und 13).

Wie die Ansichten in Fig. 15 und 16 in Richtung der Längsachse 14 zum Befestigungsende 9 hin zeigen, ist das dritte Bedienelement 13 in dieser Blickrichtung von der Abdeckung 68 vollständig verdeckt. Das dritte Bedienelement 13 ist in dieser Ansicht nicht sichtbar. Die Daumenauflagefläche 20 ist vorteilhaft vergleichsweise groß ausgebildet.

In der Blickrichtung in Richtung der Längsachse 14 zum Befestigungsende 9 hin beträgt die Fläche der Daumenauflagefläche 20 vorteilhaft mindestens 10%, insbesondere mindestens 20%, bevorzugt mindestens 25% der gesamten sichtbaren Fläche des verdickten Abschnitts 47 des ersten Handgriffs 6. Vorteilhaft beträgt die Fläche der Daumenauflagefläche 20 in der Blickrichtung in Richtung der Längsachse 14 zum Befestigungsende 9 hin weniger als 70%, insbesondere weniger als 50%, insbesondere weniger als 30% der gesamten sichtbaren Fläche des verdickten Abschnitts 47 des ersten Handgriffs 6.

In Fig. 15 ist das zweite Bedienelement 12 in betätigter Position gezeigt. In dieser Position steht das zweite Bedienelement 12 vorteilhaft nur geringfügig oder nicht über die Außenkontur des Schafts 8 über. Im Ausführungsbeispiel ist vorgesehen, dass das zweite Bedienelement 12 in betätigter Position um einen Überstand j über die Außenkontur des Schafts 8 vorsteht, der höchstens 3 mm, insbesondere höchstens 2 mm beträgt. Der Überstand j beträgt vorteilhaft an keiner Stelle des zweiten Bedienelements 12 mehr als 3 mm, insbesondere mehr als 2 mm.

Fig. 17 zeigt eine Handposition, in der die Hand 53 teilweise an der Auflagefläche 15 abgestützt ist, und zwar vorteilhaft mit der Innenseite des Zeigefingers 55. Der Mittelfinger 56 umschließt die Verdickung 47. Der Ringfinger 57 und der kleine Finger 58 liegen am ersten Bedienelement 11 an und können dieses betätigen. Der Handteller 52 des Benutzers 51 ist am zweiten Bedienelement 12 angeordnet und kann das zweite Bedienelement 12 betätigen.

In Fig. 18 ist eine Handhaltung gezeigt, bei der der Handteller 52 der Hand 53 auf der Auflagefläche 15 anliegt. Das zweite Bedienelement 12 kann mit dem kleinen Finger 58 gegriffen werden. Die Betätigung des ersten Bedienelements 11 ist für den Mittelfinger 56 vorgesehen. Auch eine Betätigung mit dem Zeigefinger 55 oder dem Ringfinger 57 kann vom Benutzer 51 bevorzugt werden. Aufgrund der Abstände d und e der Bedienelemente 11 und 12 von weniger als 7 cm zum freien Ende 10 (Figuren 5 und 9) ist eine Betätigung der Bedienelemente 11 und 12 auch bei der in Fig. 18 dargestellten Handposition ohne weiteres möglich.

Aufgrund der durchgehenden Rundung 32 kann der Benutzer 51 zwischen den unterschiedlichen Handpositionen dadurch wechseln, dass die Hand 53 an der Rundung 32 entlanggeschoben wird. Dadurch ergibt sich ein ergonomisches Arbeiten auch über längere Zeiträume.

Die Fig. 19 bis 25 zeigen die Gestaltung des zweiten Handgriffs 7. Der zweite Handgriff 7 ist vorteilhaft ein linker Handgriff. Der zweite Handgriff 7 weist im Ausführungsbeispiel keine Bedienelemente auf. Der zweite Handgriff 7 kann dadurch insgesamt kleiner als der erste Handgriff 6 ausgebildet sein. Die beiden Handgriffe 6 und 7 weisen eine unterschiedliche Form auf. Auch der zweite Handgriff 7 weist jedoch wie der erste Handgriff 6 eine Daumenauflagefläche 20, eine Auflagefläche 15 am freien Ende 10 sowie eine Ballenauflagefläche 33 auf. Gleiche Bezugszeichen kennzeichnen für beide Handgriffe einander entsprechende Elemente.

Auch der zweite Handgriff 7 weist einen Schaft 8 auf, der ein Befestigungsende 9 sowie ein freies Ende 10 aufweist. Am Befestigungsende 9 ist eine nicht dargestellte Aufnahme 44 für den Lenkerholm 43 vorgesehen. Auch der zweite Handgriff 7 weist eine Längsachse 14 auf, die vorteilhaft mit einer y-Achse zusammenfällt. Die y-Achse ist vom Befestigungsende 9 zum freien Ende 10 gerichtet. Von der Rückseite 30 zur Vorderseite 27 verläuft eine x-Achse. Die z-Achse weist, wie Fig. 20 zeigt, von der Außenseite 28 zur Innenseite 29. Die Achsen bilden ein Rechtsdrehsystem.

Wie Fig. 19 zeigt, schließt die Daumenauflagefläche 20 mit der Längsachse 14 einen Winkel β ein. Der Winkel β beträgt auch für den zweiten Handgriff 7 mindestens 20° und höchstens 70°. Im Ausführungsbeispiel ist der Winkel β für den zweiten Handgriff 7 geringfügig größer als der Winkel β für den ersten Handgriff 6. Dadurch, dass beim zweiten Handgriff 7 kein drittes Bedienelement 13 benachbart zur Daumenauflagefläche 20 anzuordnen ist, kann die Ausrichtung der Daumenauflagefläche 20 freier gewählt werden. Die Daumenauflagefläche 20 des zweiten Handgriffs 7 liegt zwischen den Ebenen 34 und 35, die vorteilhaft einen Abstand h von weniger als 3 mm, insbesondere von weniger als 2 mm aufweisen. Die Daumenauflagefläche 20 ist im Ausführungsbeispiel geringfügig konkav gewölbt. An den konkaven Abschnitt schließen sich konvexe Abschnitte an. Die Wölbung der Daumenauflagefläche 20 weist an jeder Stelle einen Radius w auf, der mindestens 10 mm, insbesondere mindestens 15 mm beträgt. Der kleinste Radius w des zweiten Handgriffs 7 ist insbesondere kleiner als der kleinste Radius w des ersten Handgriffs 6. Auch eine ebene Gestaltung der Daumenauflagefläche 20 kann vorteilhaft sein. Die Daumenauflagefläche 20 weist zum freien Ende einen Abstand e auf. Der Abstand e beträgt im Ausführungsbeispiel für den zweiten Handgriff 7 mindestens 1 cm. Die Daumenauflagefläche 20 weist eine Länge f auf, die mindestens 2,5 cm, insbesondere mindestens 3 cm beträgt. Die Daumenauflagefläche 20 weist eine Breite g, die vorteilhaft mindestens 8 mm, insbesondere mindestens 1 cm beträgt.

In Fig. 20 ist die Gestaltung der Ballenauflage 33 im Einzelnen gezeigt. Die Ballenauflage 33 bildet eine Ballenauflagefläche 36 aus, die an der Rückseite 29 des zweiten Handgriffs 7 verläuft. Die Ballenauflagefläche 36 ist näherungsweise eben und kann in einer Schnittebene parallel zur Längsachse 14 geringfügig konkav gewölbt sein. Auch eine konvexe Wölbung ist möglich. Der maximale Abstand o und dessen Verhältnis zum Durchmesser p entspricht denen beim ersten Handgriffs 6. Wie Fig. 20 zeigt, ist die Ballenauflagefläche 36 zur z-y-Ebene in der dargestellten Schnittebene senkrecht zur y-Achse um einen Winkel δ geneigt. Der Winkel δ der Ballenauflagefläche 36 des zweiten Handgriffs 7 kann größer als der Winkel δ für den ersten Handgriff 6 sein. Auch gleiche Winkel δ können vorgesehen sein.

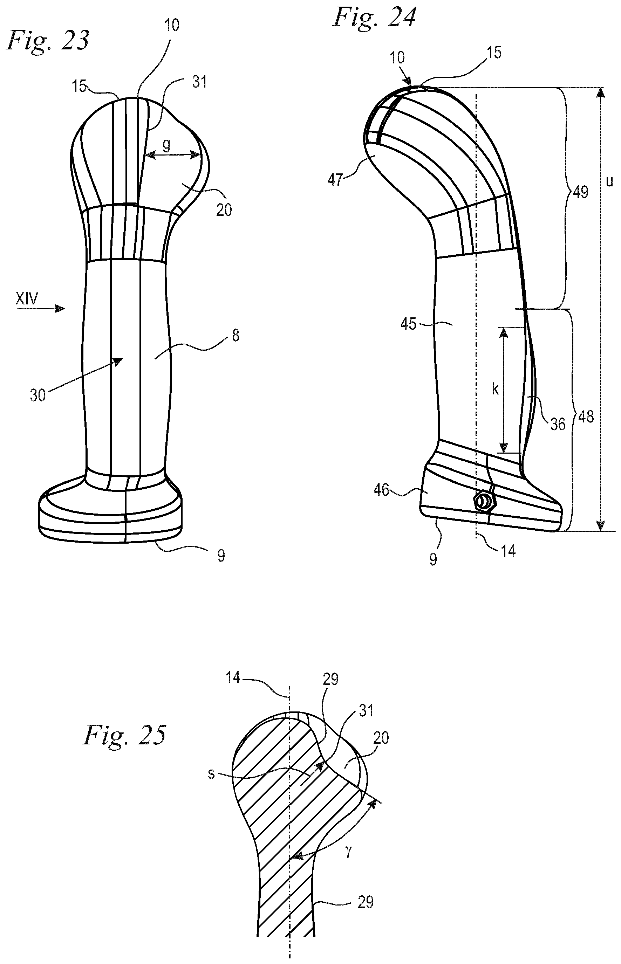

In Fig. 21 sind die Breite g und die Länge f der Daumenauflagefläche 20 gut erkennbar. Wie Fig. 22 zeigt, ist die Wölbung 31, mit der die Auflagefläche 20 in die Innenseite 29 übergeht, deutlich größer als beim ersten Handgriff 6. Dies ist auch in Fig. 23 und Fig. 25 erkennbar. Wie Fig. 25 zeigt, ist der Radius s der Wölbung 31 vorteilhaft größer als 2 mm, insbesondere größer als 5 mm. Die Daumenauflagefläche 20 schließt in einer Schnittebene 20 parallel zur Längsachse 14 mit der Längsachse 14 den Winkel γ ein, der dem zum ersten Handgriff 6 beschriebenen Winkel γ entspricht.

Wie Fig. 24 zeigt, ist die Ballenauflage 36 in der ersten Hälfte 48 des Griffabschnitts 45 angeordnet. Wie Fig. 24 auch zeigt, weist die Ballenauflagefläche 36 eine in Richtung der Längsachse 14 gemessene Länge k auf. Wie Fig. 24 zeigt, weist die Ballenauflagefläche 36 eine in Richtung der Längsachse 14 gemessene Länge k auf. Die Länge k beträgt vorteilhaft mindestens 2,5 cm, insbesondere mindestens 3,5 cm. Der zweite Handgriff 7 weist eine in Fig. 24 eingezeichnete Länge u auf. Die Länge u des zweiten Handgriffs 7 ist vorzugsweise kleiner als die Länge u des ersten Handgriffs 6.

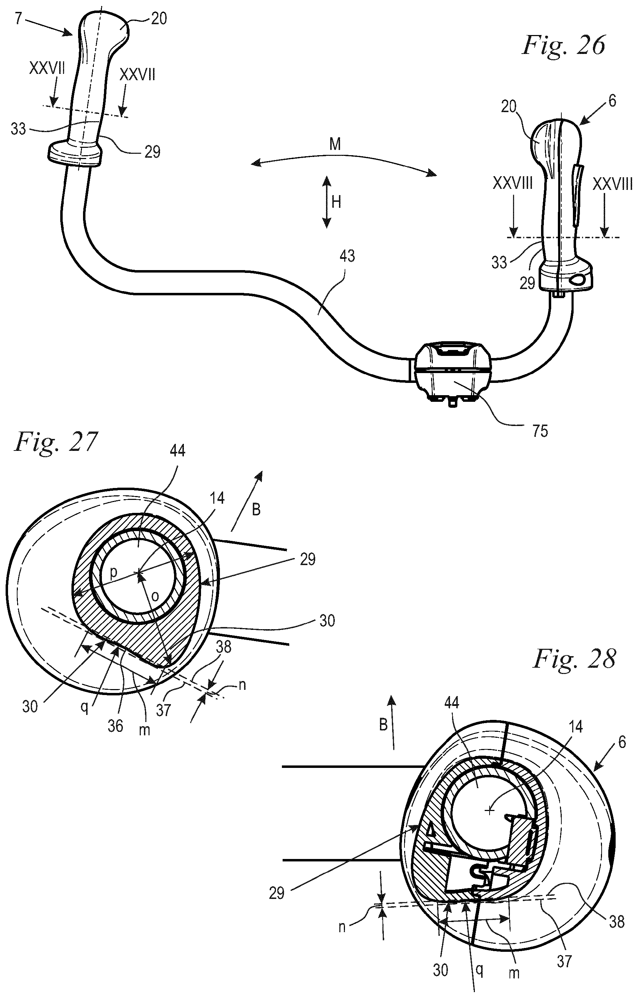

Fig. 26 zeigt die Gestaltung des Lenkergriffs 5. Am Lenkerholm 43 ist eine Befestigungseinrichtung 75 dargestellt, mit der der Lenkerholm 43 am Führungsrohr 2 fixiert werden kann. Die Befestigungseinrichtung 75 erlaubt vorteilhaft eine Anpassung der Position des Lenkerholms 43 in Längsrichtung des Führungsrohrs 2 und/oder ein Schwenken des Lenkerholms 43 um die Befestigungseinrichtung 75, um so die Neigung des Lenkerholms 43 und die Neigung der Handgriffe 6 und 7 einstellbar zu machen. In Fig. 26 sind auch die Daumenauflageflächen 22 der beiden Handgriffe 6 und 7 dargestellt. In Fig. 26 sind auch die Bewegungsrichtungen M für den Mähbetrieb und H für den Häckselbetrieb eingezeichnet.

Die Fig. 27 und 28 zeigen jeweils einen Schnitt durch die Ballenauflage 33 in dem Bereich, in dem die Ballenauflage 33 den maximalen Abstand o zur Längsachse 14 aufweist.

Wie Fig. 27 zeigt, weist die Ballenauflagefläche 36 des zweiten Handgriffs 7 eine Breite m auf. Die Breite m beträgt vorteilhaft mindestens 8 mm, insbesondere mindestens 1 cm. Über die Breite m und die Länge k liegt die Ballenauflagefläche 36 zwischen zwei parallel zueinander verlaufenden Ebenen 37 und 38. Die beiden Ebenen 37 und 38 weisen einen Abstand n zueinander auf, der vorteilhaft weniger als 3 mm beträgt. Die Länge k und die Breite m sind in dem Bereich der Ballenauflagefläche 36 gemessen, der zwischen den Ebenen 37 und 38 liegt.

Wie Fig. 28 zeigt, weist die Ballenauflagefläche 36 des ersten Handgriffs 6 eine Breite m auf, die vorteilhaft mindestens 8 mm, insbesondere mindestens 1 cm beträgt. Die Ballenauflagefläche 36 liegt zwischen zwei parallelen Ebenen 37 und 38, deren Abstand n vorteilhaft höchstens 3 mm beträgt. Die Länge k (Fig. 3) und die Breite m sind in dem Bereich der Ballenauflagefläche 36 gemessen, der zwischen den Ebenen 37 und 38 liegt.

Wie die Fig. 27 und 28 auch zeigen, weisen die Ballenauflageflächen 36, insbesondere die Ballenauflagefläche 36 des ersten Handgriffs 6, in der dargestellten Schnittebene senkrecht zur Längsachse 14 einen Radius q auf, der an jeder Stelle mindestens 10 mm, insbesondere mindestens 15 mm beträgt. Die Ballenauflagefläche 36 kann dabei in der dargestellten Schnittebene konkav und/oder konvex verlaufen. Auch ein mindestens abschnittsweise ebener Verlauf oder ein durchgehend ebener Verlauf kann vorteilhaft sein. Insbesondere für die Ballenauflagefläche 36 des zweiten Handgriffs 7 können auch kleinere Radien vorgesehen sein. Der Radius q des mittleren, konkaven Bereichs beträgt vorteilhaft mindestens 10 mm, insbesondere mindestens 15 mm. Die daran in Umfangsrichtung anschließenden konvexen Bereiche können Radien aufweisen, die kleiner als 10 mm sind.

Aufgrund der Ausrichtung der Ballenauflagefläche 36 ist über die Ballenauflagefläche 36 eine gute Krafteinleitung in einer Kraftrichtung B möglich. Die Kraftrichtungen B der beiden Handgriffe 6 und 7 können dabei geneigt zueinander verlaufen, wie die Fig. 27 und 28 zeigen. Die Kraftrichtung B verläuft vorteilhaft quer zur Ballenauflagefläche 36. Die Kraftrichtung B verläuft insbesondere senkrecht zu den Ebenen 37 und 38. Die Ballenauflagefläche 36 ist vorteilhaft quer, insbesondere senkrecht zur Richtung auf die Werkzeugeinheit 3 ausgerichtet. Dadurch können über die Ballenauflagefläche 36 Kräfte in Richtung auf die Werkzeugeinheit 3 gut eingeleitet werden.

Durch Drücken an der Ballenauflagefläche 36 eines Handgriffs 6, 7 und Halten oder Ziehen am anderen Handgriff 6, 7 kann eine Kraft in Bewegungsrichtung M für den Mähbetrieb einfach und ergonomisch eingeleitet werden. Durch Drücken an der Ballenauflagefläche 36, insbesondere Drücken an den Ballenauflageflächen 36 beider Handgriffe 6, 7, kann die Werkzeugeinheit 3 nach unten gedrückt und dadurch eine Kraft in Bewegungsrichtung H für den Häckselbetrieb gut und ergonomisch eingeleitet werden.

Die Ballenauflage 33 ist als sich an der Innenseite 29 und der Rückseite 30 des Schafts 8 erstreckende Erhebung ausgebildet. Die Ballenauflage 33 ist für beide Handgriffe 6, 7 mindestens teilweise, insbesondere vollständig in der ersten Hälfte 48 des jeweiligen Handgriffs 6, 7 angeordnet. Wie in Fig. 20 für den zweiten Handgriff 7 dargestellt, weist der Handgriff 7 eine Gummierung 69 auf. Vorteilhaft weist jeder Handgriff 6, 7 mindestens in einem Abschnitt, insbesondere über die gesamte Außenfläche des Schafts 8 eine Gummierung auf. Dadurch wird ein verbesserter Halt der Hand 52 des Benutzers 51 am Handgriff 6, 7 erreicht.

Weitere Merkmale des zweiten Handgriffs 7 entsprechen den Merkmalen des ersten Handgriffs 6, auf dessen Beschreibung hierzu verwiesen wird.

## Patentansprüche

1. Freischneider mit einem Führungsrohr (2), wobei an einem Ende (42) des Führungsrohrs (2) eine Werkzeugeinheit (3) angeordnet ist, wobei an dem Führungsrohr (2) ein Lenkerholm (43) festgelegt ist, der an jedem Ende einen Handgriff (6, 7) trägt, wobei jeder Handgriff (6, 7) einen Schaft (8) aufweist, der ein Befestigungsende (9), an dem der Handgriff (6, 7) am Lenkerholm (43) festgelegt ist, und ein freies Ende (10) aufweist, wobei jeder Handgriff (6, 7) eine der Werkzeugeinheit (3) zugewandt liegende Vorderseite (27) und eine gegenüberliegende Rückseite (30) aufweist, wobei die Handgriffe (6, 7) einander zugewandt liegende Innenseiten (29) und einander abgewandte Außenseiten (28) aufweisen,
**dadurch gekennzeichnet, dass** mindestens einer der Handgriffe (6, 7) eine Ballenauflage (33) aufweist, die als sich an der Innenseite (29) und der Rückseite (30) des Schafts (8) erstreckende Erhebung ausgebildet ist,
- wobei die Ballenauflage (33) eine Ballenauflagefläche (36) aufweist, die zwischen zwei Ebenen (37, 38) liegt, deren Abstand (n) weniger als 3 mm beträgt, wobei die in Richtung der Längsachse (14) des Handgriffs (6, 7) gemessene Länge (k) der Ballenauflagefläche (36) mindestens 2,5 cm beträgt, und wobei die Breite (m) der Ballenauflagefläche (36) mindestens 8 mm beträgt
und/ oder
- wobei der maximale Abstand (o) der Ballenauflage (33) zur Längsachse (14) mindestens das 0,7fache des senkrecht zum maximalen Abstand (o) und senkrecht zur Längsachse (14) gemessenen Durchmessers (p) des Schafts (8) beträgt.

2. Freischneider nach Anspruch 1,
**dadurch gekennzeichnet, dass** die Rückseite (30) an der Ballenauflagefläche (36) in einer Schnittebene senkrecht zur Längsachse (14) an jeder Stelle einen Radius (q) von mindestens 10 mm aufweist, insbesondere etwa eben ausgebildet ist.

3. Freischneider nach Anspruch 1 oder 2,
**dadurch gekennzeichnet, dass** die Ballenauflage (33) in der an das Befestigungsende (9) angrenzenden Hälfte (48) des Handgriffs (6, 7) angeordnet ist.

4. Freischneider nach einem der Ansprüche 1 bis 3,
**dadurch gekennzeichnet, dass** beide Handgriffe (6, 7) eine unterschiedliche Form haben.

5. Freischneider nach einem der Ansprüche 1 bis 4,
**dadurch gekennzeichnet, dass** der rechte Handgriff (6) größer als der linke Handgriff (7) ausgebildet ist.

6. Freischneider nach einem der Ansprüche 1 bis 5,
**dadurch gekennzeichnet, dass** mindestens ein Handgriff (6, 7) in mindestens einem Abschnitt des Schafts (8) eine Gummierung (69) aufweist.

## Claims

1. Brush cutter having a guide tube (2), wherein a tool unit (3) is arranged at one end (42) of the guide tube (2), wherein a handlebar (43) is fixed on the guide tube (2), which handlebar carries a handle (6, 7) at each end, wherein each handle (6, 7) has a shaft (8) which has a fastening end (9), at which the handle (6, 7) is fixed on the handlebar (43), and a free end (10), wherein each handle (6, 7) has a front side (27) facing the tool unit (3) and an opposite rear side (30), wherein the handles (6, 7) have inner sides (29) facing one another and outer sides (28) facing away from one another,
**characterized in that** at least one of the handles (6, 7) has a palm support (33), which is formed as an elevation extending on the inner side (29) and the rear side (30) of the shaft (8),
- wherein the palm support (33) has a palm support surface (36), which lies between two planes (37, 38), the distance (n) of which is less than 3 mm, wherein the length (k) of the palm support surface (36), measured in the direction of the longitudinal axis (14) of the handle (6, 7), is at least 2.5 cm, and wherein the width (m) of the palm support surface (36) is at least 8 mm
and/or
- wherein the maximum distance (o) of the palm support (33) from the longitudinal axis (14) is at least 0.7 times the diameter (p) of the shaft (8), measured perpendicularly to the maximum distance (o) and perpendicularly to the longitudinal axis (14).

2. Brush cutter according to claim 1,
**characterized in that** the rear side (30) at the palm support surface (36) has, in a sectional plane perpendicular to the longitudinal axis (14), a radius (q) of at least 10 mm at every point, and is in particular formed approximately flat.

3. Brush cutter according to claim 1 or 2,
**characterized in that** the palm support (33) is arranged in the half (48) of the handle (6, 7) adjacent to the fastening end (9).

4. Brush cutter according to one of claims 1 to 3,
**characterized in that** both handles (6, 7) have a different shape.

5. Brush cutter according to one of claims 1 to 4,
**characterized in that** the right handle (6) is formed larger than the left handle (7).

6. Brush cutter according to one of claims 1 to 5,
**characterized in that** at least one handle (6, 7) has a rubber covering (69) in at least one section of the shaft (8).

## Revendications

1. Débroussailleuse comportant un tube de guidage (2), une unité d'outil (3) étant disposée à une extrémité (42) du tube de guidage (2), un guidon (43) étant fixé sur le tube de guidage (2), lequel guidon porte une poignée (6, 7) à chaque extrémité, chaque poignée (6, 7) présentant une tige (8) qui comporte une extrémité de fixation (9), au niveau de laquelle la poignée (6, 7) est fixée au guidon (43), et une extrémité libre (10), chaque poignée (6, 7) présentant une face avant (27) tournée vers l'unité d'outil (3) et une face arrière opposée (30), les poignées (6, 7) présentant des côtés intérieurs (29) tournés l'un vers l'autre et des côtés extérieurs (28) tournés à l'opposé l'un de l'autre,
**caractérisé en ce qu'**au moins l'une des poignées (6, 7) présente un appui de paume (33), qui est réalisé sous la forme d'une saillie s'étendant sur le côté intérieur (29) et la face arrière (30) de la tige (8),
- l'appui de paume (33) présentant une surface d'appui de paume (36), qui est située entre deux plans (37, 38), dont l'écart (n) est inférieur à 3 mm, la longueur (k) de la surface d'appui de paume (36), mesurée dans la direction de l'axe longitudinal (14) de la poignée (6, 7), étant d'au moins 2,5 cm, et la largeur (m) de la surface d'appui de paume (36) étant d'au moins 8 mm
et/ou
- la distance maximale (o) de l'appui de paume (33) à l'axe longitudinal (14) étant d'au moins 0,7 fois le diamètre (p) de la tige (8), mesuré perpendiculairement à la distance maximale (o) et perpendiculairement à l'axe longitudinal (14).

2. Débroussailleuse selon la revendication 1,
**caractérisé en ce que** la face arrière (30), au niveau de la surface d'appui de paume (36), présente, dans un plan de coupe perpendiculaire à l'axe longitudinal (14), en tout point, un rayon (q) d'au moins 10 mm et est, en particulier, réalisée sensiblement plane.

3. Débroussailleuse selon la revendication 1 ou 2,
**caractérisé en ce que** l'appui de paume (33) est disposé dans la moitié (48) de la poignée (6, 7) adjacente à l'extrémité de fixation (9).

4. Débroussailleuse selon l'une des revendications 1 à 3,
**caractérisé en ce que** les deux poignées (6, 7) ont une forme différente.

5. Débroussailleuse selon l'une des revendications 1 à 4,
**caractérisé en ce que** la poignée droite (6) est réalisée plus grande que la poignée gauche (7).

6. Débroussailleuse selon l'une des revendications 1 à 5,
**caractérisé en ce qu'**au moins une poignée (6, 7) présente, dans au moins une section de la tige (8), un revêtement en caoutchouc (69).
